## Europäisches Patentamt
## European Patent Office
## Office européen des brevets

(19)

(11) Veröffentlichungsnummer: **0 163 156**

**A1**

(12)

# EUROPÄISCHE PATENTANMELDUNG

(21) Anmeldenummer: 85105312.4

(22) Anmeldetag: 02.05.85

(51) Int. Cl.⁴: **A 61 C 17/02**
**F 16 K 7/06**

(30) Priorität: 30.05.84 DE 3420213

(43) Veröffentlichungstag der Anmeldung:
04.12.85 Patentblatt 85/49

(84) Benannte Vertragsstaaten:
AT BE CH DE FR GB IT LI LU NL SE

(71) Anmelder: Gimelli & Co AG
Eichenweg 2
CH-3052 Zollikofen(CH)

(72) Erfinder: Homman, Edgar
Reuenberg
CH-3257 Grossaffoltern(CH)

(74) Vertreter: Schlagwein, Udo, Dipl.-Ing.
Anwaltsbüro Ruppert & Schlagwein Bahnhofsallee 11
D-6350 Bad Nauheim(DE)

(54) Handgerät zur Körperpflege.

(57) Ein Handgerät zur Mund- und Zahnpflege hat ein Griffteil (1) mit einer als Schieber ausgebildeten, axial verschieblichen Handhabe (5). Ein Druckknopf (6) ist im Gehäuse (7) des Griffteils (1) an Schrägflächen (20, 21) geführt und ragt durch einen Schlitz (22) des Gehäuses (7) und eine Durchbrechung (23) der Handhabe (5).

Der Druckknopf (6) stützt sich im Inneren des Griffteils (1) über eine Kugel (24) auf einem Quetschschlauch (13) ab. Wird die Handhabe (5) nach vorn verschoben, dann bewegt sich der Druckknopf (6) auf Grund der Schrägflächen (20, 21) zunehmend in das Griffteil (1) hinein und quetscht den Quetschschlauch (13) zunehmend ab. Hiervon unabhängig kann der Druckknopf (6) jederzeit so weit in das Griffteil (1) hineinbewegt werden, daß der Wasserdurchfluß unterbrochen its.

Fig. 3

EP 0 163 156 A1

0163156

- 1 -

Gimelli & Co AG                          CH-3052 Zollikofen

Handgerät zur Körperpflege

Die Erfindung bezieht sich auf ein Handgerät zur Körperpflege, insbesondere Zahn- und Mundpflege, welches ein Griffteil zur Halterung einer Spritzdüse hat, das ein eine Handhabe aufweisendes Betätigungsorgan zur Einstellung der Durchflußmenge eines im Gehäuse des Handgerätes vorgesehenen Quetschventils und ein die Einstellung der Durchflußmenge nicht veränderndes Absperrorgan zum vorübergehenden Unterbrechen des Durchflusses durch Betätigung desselben Quetschventils aufweist. Ein solches Handgerät ist in der älteren, deutschen Patentanmeldung P 33 47 239.4 beschrieben.

Bei Handgeräten dieser Art, beispielsweise Mundduschen oder zahnärztlichen Wasserspritzgeräten, kommt es darauf an, die Wasserdurchflußmenge einstellen und vorübergehend unterbrechen zu können. Dieses Erfordernis wird bei einem zahnärztlichen Spritzgerät gemäß der EP-OS 0 023 672 dadurch erfüllt, daß ein Betätigungsring verdrehbar auf einem Griffteil angeordnet ist und dieser Betätigungsring je nach seiner Stellung mittels Schrägflächen eine Kugel als Quetschkörper mehr oder weniger gegen einen abzuquetschenden Schlauch drückt. Die Schrägflächen im Betätigungsring sind dabei in Bezug auf die Kugel und die übrigen Bauteile so ausgelegt, daß der abzuquetschende Schlauch in einer Endstellung des Betätigungsringes nicht abgequetscht und in einer anderen Endstellung vollständig abgequetscht ist.

...

- 2 -

Nachteilig bei dem genannten Handstück ist es, daß der Betätigungsring in der den Durchfluß unterbrechenden Position verbleibt, wenn man ihn losläßt. Das kann dazu führen, daß die das Wasser durch das Handstück fördernde Pumpe über längere Zeit völlig unnötig eingeschaltet bleibt, ohne Wasser durch das Handstück fördern zu können. Bei netzstrombetriebenen Mundduschen wird der Motor der Pumpe so ausgelegt sein, daß der Wasserdruck beim Unterbrechen des Durchflusses durch das Handstück so weit ansteigen kann, daß ein Bypass in der Pumpe öffnet. Die Pumpe macht dann stärkere Geräusche als beim normalen Betrieb, so daß normalerweise nicht vergessen werden wird, sie abzuschalten. Anders ist es jedoch meist bei batteriebetriebenen Mundduschen. Zumindest dann, wenn sie auf eine kleinere Leistungsstufe eingestellt sind, bleibt der Pumpenmotor bei am Handstück unterbrochenem Wasserfluß unter Strom stehen. Es kann deshalb nach einem Unterbrechen des Wasserdurchflusses leicht vergessen werden, die Pumpe abzuschalten, so daß es zu einem raschen Entleeren der Batterie und möglicherweise zu einer Zerstörung des Pumpenmotors kommt.

Ein weiterer Nachteil des vorbekannten Handstückes gemäß der EP-OS 0 023 672 liegt darin, daß nach dem Unterbrechen des Durchflusses die gewünschte Durchflußmenge neu einreguliert werden muß. Die einmal als optimal empfundene Einstellung der Durchflußmenge geht also mit jeder Durchflußunterbrechung verloren.

Der letztgenannte Nachteil wird bei dem als Munddusche ausgebildeten Handgerät gemäß der eingangs genannten deutschen Patentanmeldung P 33 47 239.4 dadurch vermieden, daß ein Betätigungsring zur Unterbrechung des Durchflusses in Längsrichtung des Griffteils verschiebbar und zur Regulierung der Durchflußmenge unabhängig hiervon verdrehbar ist. Dadurch bleibt bei einer Unterbrechung des Durchflusses die gewählte Durchflußmenge einge-

...

- 3 -

stellt. Die Reibkräfte, welche zum Verschieben des Betätigungsringes zwecks Unterbrechung des Wasserflusses überwunden werden müssen, sind jedoch zwangsläufig so hoch, daß nur durch eine zusätzliche Rückstellfeder der Betätigungsring nach einer Durchflußunterbrechung beim Loslassen des Betätigungsringes selbsttätig in eine den Durchfluß freigebende Stellung gelangen kann. Ein solcher Aufwand ist jedoch in den meisten Fällen für Handgeräte nicht mehr angebracht und führt zwangsläufig auch zu einer Störanfälligkeit.

Der Erfindung liegt die Aufgabe zugrunde, ein Handgerät der eingangs genannten Art zu entwickeln, welches ein vollständiges Unterbrechen des Wasserdurchflusses unabhängig von der eingestellten Durchflußmenge ermöglicht, das jedoch selbsttätig auf die eingestellte Durchflußmenge zurückschaltet, sobald das für die Wasserunterbrechung vorgesehene Absperrorgan losgelassen wird.

Diese Aufgabe wird erfindungsgemäß dadurch gelöst, daß das Absperrorgan ein von der Innenseite des Gehäuses her in eine Durchbrechung der Handhabe eingesetzter, in einem Gehäuseschlitz verschieblicher, das Quetschventil betätigender Druckknopf ist, der mit zumindest einer Führungsfläche gegen zumindest eine Schrägfläche des Gehäuses des Griffteils von der Gehäuseinnenseite her anliegt und durch Verschiebung der Handhabe entlang der Schrägfläche beweglich ist.

Bei einem solchen Handgerät verschiebt sich der Druckknopf bei Verschiebung der Handhabe radial in das Griffteil hinein und quetscht dadurch den im Gehäuse vorgesehenen Schlauch des Quetschventils zunehmend ab. Unabhängig von der Stellung der Handhabe kann der Druckknopf jedoch jederzeit durch Niederdrücken weiter in das Gehäuse hinein bewegt werden, so daß ein vollständiges Unterbrechen des Durchflusses möglich ist. Läßt man den Druck-

...

knopf los, so gelangt er wieder in die der Stellung der Handhabe entsprechende Stellung, so daß der eingestellte Wasserdurchfluß wieder gegeben ist. Da das Abquetschen des Schlauches zwecks Unterbrechung des Wasserdurchflusses unmittelbar durch Niederdrücken des Druckknopfes und nicht über schräg verlaufende Steuerflächen erfolgt, sind die zu überwindenden Reibkräfte gering, so daß der Druckknopf zuverlässig in seine Ausgangsstellung zurück gelangt, sobald man ihn losläßt. Dadurch ist ausgeschlossen, daß am Handgerät der Wasserdurchfluß bleibend unterbrochen und vergessen wird, die Pumpe abzuschalten.

Die Handhabung des Handgerätes ist besonders einfach, wenn das Betätigungsorgan zur Einstellung der Durchflußmenge ein axial in Bezug auf das Griffteil verschieblicher Schieber ist. Die erforderliche Verschiebebewegung und das Niederdrücken des Druckknopfes können leichter mit dem Daumen der das Gerät haltenden Hand durchgeführt werden als ein Verschieben und Verdrehen des Betätigungsringes des Handgerätes gemäß der eingangs genannten deutschen Patentanmeldung P 33 47 239.4.

Konstruktiv besonders einfach gestaltet sich das Handgerät, wenn der Druckknopf an beiden Seiten des Quetschventils mit einer Führungsfläche gegen jeweils eine in Axialrichtung des Griffteils verlaufende Schrägfläche anliegt.

Da die Handhabe mit dem Druckknopf axial verschiebbar ist, das Quetschventil jedoch feststeht, kommt es bei einer Verschiebung der Handhabe zu einer Relativbewegung zwischen Druckknopf und dem Quetschventil. Diese Relativbewegung ist besonders reibungsarm, wenn der Druckknopf an seiner dem Quetschventil zugewandten Seite zwischen den Führungsflächen eine in Axialrichtung des Griffteils verlaufende, torbogenförmige Ausnehmung hat, gegen die eine Kugel anliegt, die andererseits als Quetschelement

...

- 5 -

auf dem Quetschschlauch aufsitzt.

Eine andere, vorteilhafte Ausgestaltung der Erfindung besteht darin, daß der Schieber mittels Rasten in einer Vielzahl von Stellungen reibschlüssig arretierbar ist. Durch diese Rasten ist auf einfache Weise sichergestellt, daß der Schieber in seinen jeweiligen Stellungen verbleibt und dadurch eine einmal eingestellte Durchflußmenge sich nicht unbeabsichtigt verändert.

Die Erfindung läßt zahlreiche Ausführungsformen zu. Eine davon ist in der Zeichnung dargestellt und wird nachfolgend beschrieben. In der Zeichnung zeigen

Fig. 1 eine Seitenansicht eines erfindungsgemäß gestalteten Handgerätes,

Fig. 2 das Handgerät gemäß Figur 1, teilweise in Längsrichtung geschnitten,

Fig. 3 einen Querschnitt durch das Handgerät entlang der Linie III - III in Fig. 2,

Fig. 4 einen Längsschnitt durch einen mittleren Bereich des Handgerätes in einer ersten Schaltstellung,

Fig. 5 einen Längsschnitt durch einen mittleren Bereich des Handgerätes in einer zweiten Schaltstellung.

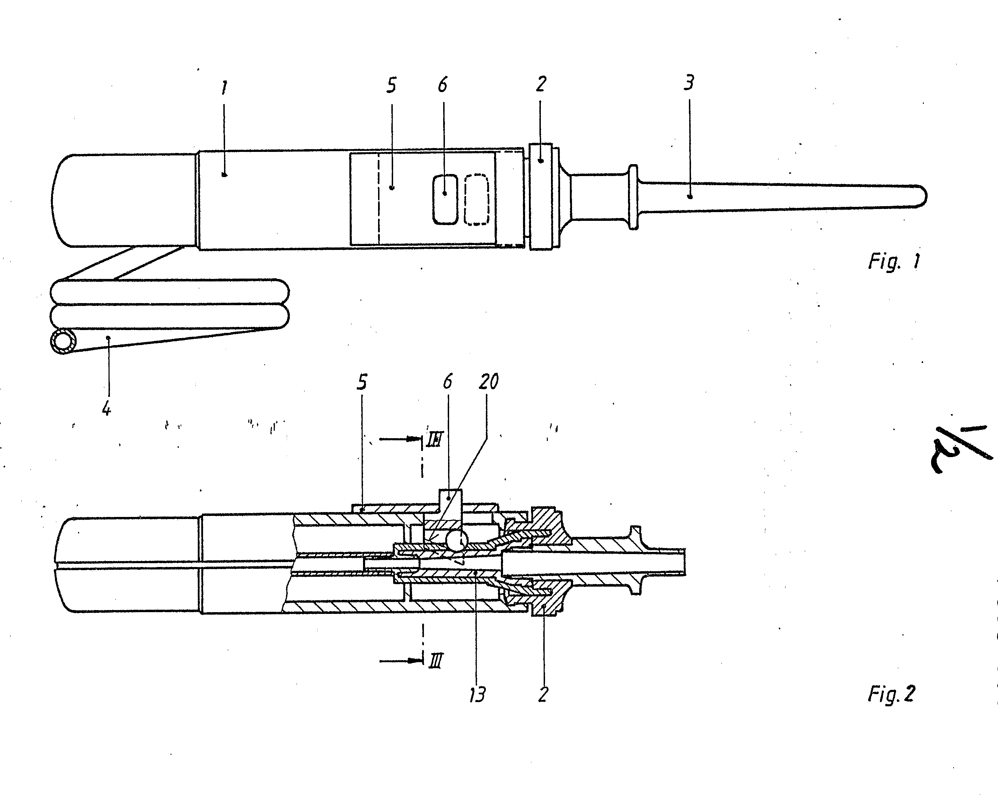

Das in Figur 1 dargestellte Handgerät besteht im wesentlichen aus einem Griffteil 1 mit einem Kuppelstück 2, in das eine Spritzdüse 3 eingesteckt ist. Wasser wird dem Griffteil 1 über einen Schlauch 4 aus einem nicht dargestellten Wasserbehälter zugeführt. Zur Steuerung der Durchflußmenge des Wassers dient eine Handhabe 5, die auf dem Griffteil 1 als in Längsrichtung des Griffteils 1 verschiebbarer Schieber ausgebildet ist. In der Handhabe 5 ist ein Druckknopf 6 angeordnet, mit dem unabhängig von der Stellung der Handhabe 5 jederzeit durch Niederdrücken des Druckknopfes 6 der Wasserdurchfluß unterbrochen werden kann.

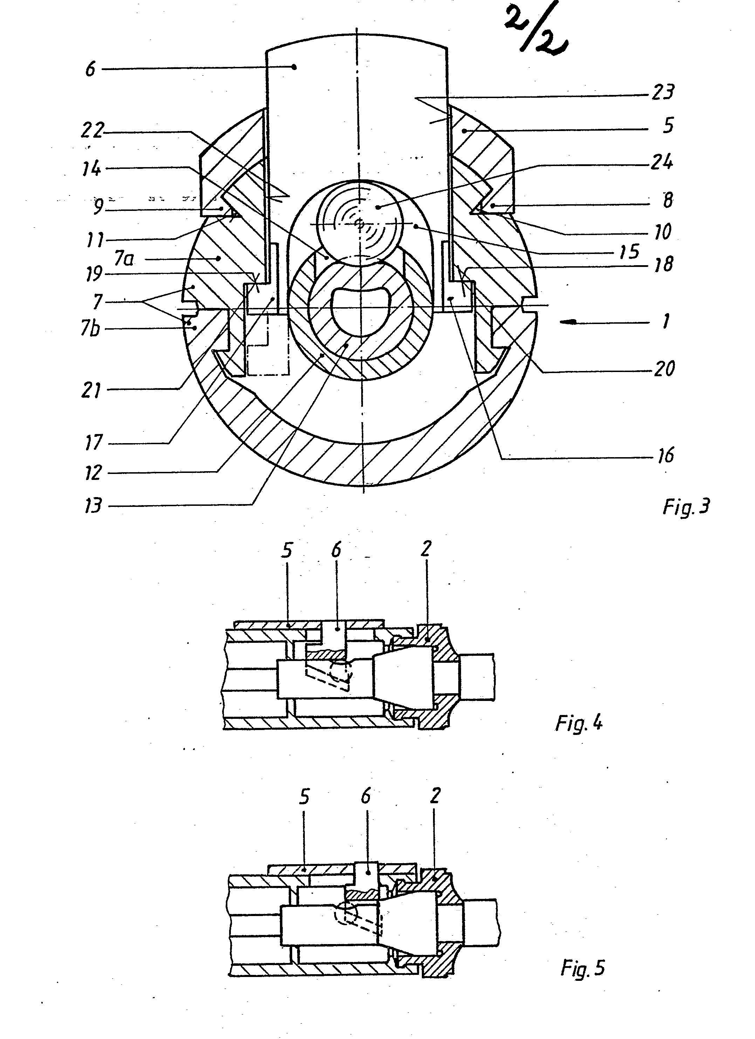

Der innere Aufbau des Handgerätes ergibt sich aus den Figuren 2 und 3. Die Figur 3 zeigt, daß das Griffteil 1 ein aus zwei miteinander verschnappten Gehäusehälften 7a, 7b bestehendes Gehäuse 7 hat. Außenseitig auf der Gehäusehälfte 7 a ist die Handhabe 5 dadurch verschieblich gehalten, daß sie mit zwei Führungsvorsprüngen 8, 9 in jeweils eine Führungsnut 10, 11 der Gehäusehälfte 7a greift.

Koaxial im Griffteil 1 ist ein Ventilmantel 12 vorgesehen, in dem ein das Wasser zur Spritzdüse 3 führender Quetschschlauch 13 angeordnet ist. In einer Öffnung 14 des Ventilmantels 12 sitzt auf dem Quetschschlauch 13 eine Kugel 24 als Druckkörper zum Abquetschen des Quetschschlauches 13.

Für die Erfindung wesentlich ist die Gestaltung und Führung des Druckknopfes 6. Dieser hat gehäuseinnenseitig eine torbogenförmige Ausnehmung 15, mit der er sich gegen die Kugel 24 abstützt. Seitlich dieser Ausnehmung ist am Druckknopf 6 jeweils ein nach außen gerichteter Führungsvorsprung 16, 17 mit einer nach oben weisenden Führungsfläche 18, 19 vorgesehen. Diese Führungsflächen 18, 19 liegen gegen Schrägflächen 20, 21 in der Gehäusehälfte 7 a an. Zu erkennen ist in Fig. 3 weiterhin, daß der Druckknopf 6 durch einen Schlitz 22 der Gehäusehälfte 7a und eine Durchbrechung 23 der Handhabe 5 geführt ist und aus der Handhabe 5 herausragt. Durch die Elastizität des Quetschschlauches 13 wird die Kugel 24 in der Zeichnung gesehen nach oben vorgespannt und der

. . . .

Druckknopf 6 dadurch mit seinen Führungsflächen 18, 19 in Anlage an die Schrägflächen 20, 21 gehalten.

In Figur 2 ist eine Schrägfläche 20 gestrichelt dargestellt. Zu erkennen ist, daß diese Schrägfläche 20 zum Küppelstück 2 hin in das Griffteil 1 hinein verläuft. Dadurch wird der Druckknopf 6 zunehmend in das Griffteil 1 hineinbewegt, wenn man die Handhabe 5 in Richtung des Kuppelstückes 2 verschiebt.

Die Figur 4 zeigt die Handhabe 5 in einer rückwärtigen Stellung und den Druckknopf 6 vollständig niedergedrückt, so daß der Wasserdurchfluß unterbrochen ist. Würde man den Druckknopf 6 loslassen, so würde er in die in Figur 2 gezeigte Stellung gelangen und einen maximalen Durchfluß durch den Quetschschlauch 13 erlauben.

In Figur 5 ist die Handhabe 5 so weit wie möglich nach vorne zum Kuppelstück 2 hin geschoben. Der Druckknopf 6 ist wiederum vollständig niedergedrückt und unterbricht den Wasserdurchfluß. Läßt man den Druckknopf 6 in dieser Stellung los, so bewegt er sich nur geringfügig aus der Handhabe 5 heraus und erlaubt nur einen der vordersten Stellung der Handhabe 5 entsprechenden, geringen Wasserdurchfluß.

## Auflistung der verwendeten Bezugszeichen

| | | | |
|---|---|---|---|
| 1 | Griffteil | 16 | Führungsvorsprung |
| 2 | Kuppelstück | 17 | Führungsvorsprung |
| 3 | Spritzdüse | 18 | Führungsfläche |
| 4 | Schlauch | 19 | Führungsfläche |
| 5 | Handhabe | 20 | Schrägfläche |
| | | | |
| 6 | Druckknopf | 21 | Schrägfläche |
| 7 | Gehäuse | 22 | Schlitz |
| 7a | Gehäusehälfte | 23 | Durchbrechung |
| 7b | Gehäusehälfte | 24 | Kugel |
| 8 | Führungsvorsprung | | |
| 9 | Führungsvorsprung | | |
| 10 | Führungsnut | | |
| | | | |
| 11 | Führungsnut | | |
| 12 | Ventilmantel | | |
| 13 | Quetschschlauch | | |
| 14 | Öffnung | | |
| 15 | Ausnehmung | | |

### Ansprüche

1. Handgerät zur Körperpflege, insbesondere Zahn- und Mundpflege, welches ein Griffteil zur Halterung einer Spritzdüse hat, das ein eine Handhabe aufweisendes Betätigungsorgan zur Einstellung der Durchflußmenge eines im Gehäuse des Handgerätes vorgesehenen Quetschventils und ein die Einstellung der Durchflußmenge nicht veränderndes Absperrorgan zum vorübergehenden Unterbrechen des Durchflusses durch Betätigung desselben Quetschventils hat, dadurch gekennzeichnet, daß das Absperrorgan ein von der Innenseite des Gehäuses (7) her in eine Durchbrechung (23) der Handhabe (5) eingesetzter, in einem Gehäuseschlitz (22) verschieblicher, das Quetschventil betätigender Druckknopf (6) ist, der mit zumindest einer Führungsfläche (18, 19) gegen zumindest eine Schrägfläche (20, 21) des Gehäuses (7) des Griffteils (1) von der Gehäuseinnenseite her anliegt und durch Verschiebung der Handhabe (5) entlang der Schrägfläche (20, 21) beweglich ist.

2. Handgerät nach Anspruch 1 dadurch gekennzeichnet, daß die Handhabe (5) zur Einstellung der Durchflußmenge ein axial in Bezug auf das Griffteil (1) verschieblicher Schieber ist.

3. Handgerät nach Anspruch 1 oder einem der folgenden, dadurch gekennzeichnet, daß der Druckknopf (6) an beiden Seiten des Quetschventils mit einer Führungsfläche (18, 19) gegen jeweils eine in Axialrichtung des Griffteils (1) verlaufende Schrägfläche (20, 21) anliegt.

4. Handgerät nach Anspruch 1 oder einem der folgenden, dadurch gekennzeichnet, daß der Druckknopf (6) an seiner dem Quetschventil zugewandten Seite zwischen den Führungsflächen (18, 19) eine in Axialrichtung des Griffteils (1) verlaufende, torbogenförmige Ausnehmung (15) hat, gegen die eine Kugel (24) anliegt, die andererseits als Quetschelement auf dem Quetschschlauch (13) aufsitzt.

5. Handgerät nach Anspruch 1 oder einem der folgenden, dadurch gekennzeichnet, daß die Handhabe (5) mittels Rasten in einer Vielzahl von Stellungen reibschlüssig arretierbar ist.

Fig. 1

Fig. 2

0163156

2/2

Fig. 3

Fig. 4

Fig. 5

### Europäisches Patentamt

## EUROPÄISCHER RECHERCHENBERICHT

Nummer der Anmeldung

EP 85 10 5312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 724 818 (ROGER) <br> * Spalte 2, Zeile 39 - Spalte 4, Zeile 23 * | 1 | A 61 C 17/02 <br> F 16 K 7/06 |
| D,A | EP-A-0 023 672 (SIEMENS AG) | | |
| A | DE-A-3 231 537 (GIMELLI & CO. AG) | | |
| A | DE-A-3 152 035 (KUNO MOSER GMBH) | | |
| A | DE-A-3 003 527 (VOLLER) | | |

| RECHERCHIERTE SACHGEBIETE (Int. Cl.4) |
|---|
| A 61 C 1/00 <br> A 61 C 17/00 <br> A 61 H 13/00 <br> F 16 K 7/00 |

Der vorliegende Recherchenbericht wurde für alle Patentansprüche erstellt.

| Recherchenort <br> BERLIN | Abschlußdatum der Recherche <br> 02-08-1985 | Prüfer <br> SIMON J J P |
|---|---|---|